# EUROPEAN PATENT SPECIFICATION

(11) **EP 1 992 145 B1**
(45) Date of publication and mention of the grant of the patent: **25.04.2018**
(21) Application number: 07723012.6
(22) Date of filing: 02.03.2007
(51) Int. Cl.: H04L 29/08

(54) **MANAGING PLAYLISTS**
VERWALTUNG VON PLAYLISTS
GESTION DE LISTES D'ÉCOUTE

(30) Priority: 03.03.2006 SE 0600488
(43) Date of publication of application: 19.11.2008
(73) Proprietor: Hutchison Whampoa Three G IP (Bahamas) Limited, Nassau, New Providence (BS)
(72) Inventor: EDLUND, Johan, SE-13673 Haninge (SE); AVERSKOG, Christian, SE-13236 Saltsjö-Boo (SE)
(74) Representative: Jennings, Michael John
(86) International application number: PCT/EP2007/001817
(87) International publication number: WO 2007/098958

(56) References cited:
- EP-A- 1 283 487
- WO-A-2005/034407

## Description

### TECHNICAL FIELD

The present invention relates to a mobile telephone system for streaming playlists to a device in a mobile network, and to managing playlists for playing items in mobile telephones, the managing including e.g. composing and editing playlists.

### BACKGROUND

A consumer of music often prefers to consume music non-stop. In conventional media players this is allowed by using so called playlists, i.e. lists of music items that is played one by one in some manner, such as in a sequential, often repeated manner or in a random manner. This is e.g. the way in which much music is consumed today via portable devices.

Music items in a playlist for a portable device must be available in some suitable way, such as stored in a storage area of the device in the conventional way. This is a limitation since a consumer must first retrieve the wanted music from a music provider and then transfer the music to the portable device before the music can be added to a playlist. For devices adapted for wireless communication, such as mobile telephones, the music items can be streamed to the devices when required.

There exists a need to manage music playlists based on data from a central storage area that is accessed in one of the following ways:
- from the Internet via a web browser
- from the mobile network via a mobile telephone browser
- from the mobile network with a specialized music player application

Music in the such playlists can be consumed in the mobile telephone via a specialized music player application and/or via the internal or built-in media player.

The company 3 Scandinavia launched a service called 3OnAir in the middle of 2005. That service made more than 50 audio and video channels available to the customers via streaming. The user was not allowed to influence the music that was played in the channels but the usage of the service was high. This service was then followed up in November 2005 with a Full-length audio download service. This service focused mainly on new 3G devices with a lot of internal memory (or memory card capabilities) and it left out the users without large memory capacity.

### SUMMARY

The invention relates to a mobile telephone system having an efficient handling of media items to be played in mobile devices. In a first aspect, the present invention provides a mobile telephone system according to appended claim 1.

Problems to which the invention may provide solutions include how to manage music items to be played in a mobile device.

Generally, the system as described herein allows a consumer to play her/his playlists on a mobile telephone over a 3G network via streaming technology using the RTSP protocol for streaming media and a streaming server, e.g. such as that provided by Vidiator. The system allows playlists for e.g. music to be created and administrated, the playlists containing names or equivalent identification of items residing in a server based, centralized library. The playlists can generally be managed using the Internet or software in the mobile telephone. In particular, it can be done from a personal computer via the Internet, from the mobile telephone using its Internet browser and from a specialised player application in the mobile telephone.

In the system features of the two services described above launched by the company 3 Scandinavia, the quick delivery mechanism and the freedom of choice for the consumer, are combined. Thereby, it may be possible for a user to create her/his own playlist and e.g. to listen to that playlist streaming directly to a mobile telephone, the listening then not being dependent on the memory capacity of the telephone.

Additional objects and advantages of the invention will be set forth in the description which follows, and in part will be obvious from the description, or may be learned by practice of the invention. The objects and advantages of the invention may be realized and obtained by means of the methods, processes, instrumentalities and combinations particularly pointed out in the appended claims.

Prior publication EP1283487 A2 describes a management server device that is used in a content providing system for communicating with a user terminal. The management server device includes a playlist creation device and a storage device such that a playlist from the storage device is transmitted to the user terminal on request by the user of the user terminal.

Prior publication WO2005/034407 teaches a system and method of providing cost-effective broadband services using hybrid wireless network where a semantic multicast routing approach is applied for caching and delivering media items based on individual user profiles.

### BRIEF DESCRIPTION OF THE DRAWINGS

While the novel features of the invention are set forth with particularly in the appended claims, a complete understanding of the invention, both as to organization and content, and of the above and other features thereof may be gained from and the invention will be better appreciated from a consideration of the following detailed description of non-limiting embodiments presented hereinbelow with reference to the accompanying drawings, in which:
- Fig. 1 is a general functional view of a mobile telephone system allowing an efficient handling of music items to be played in a mobile device,
- Fig. 2 is a block diagram of components of the mobile telephone system of Fig. 1,
- Fig. 3 is a picture illustrating the format of metadata records for playlists, - Fig. 4 is a picture illustrating the format of a general personal playlist, and

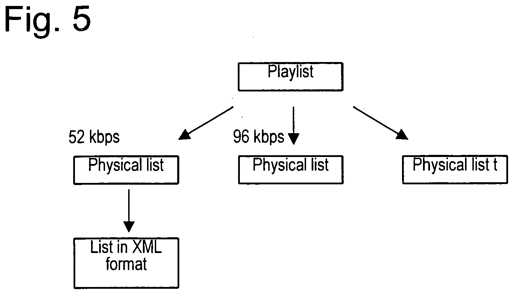

- Fig. 5 is a picture illustrating the relation between a personal playlist, physical playlists and a list in XML-format.

### DETAILED DESCRIPTION

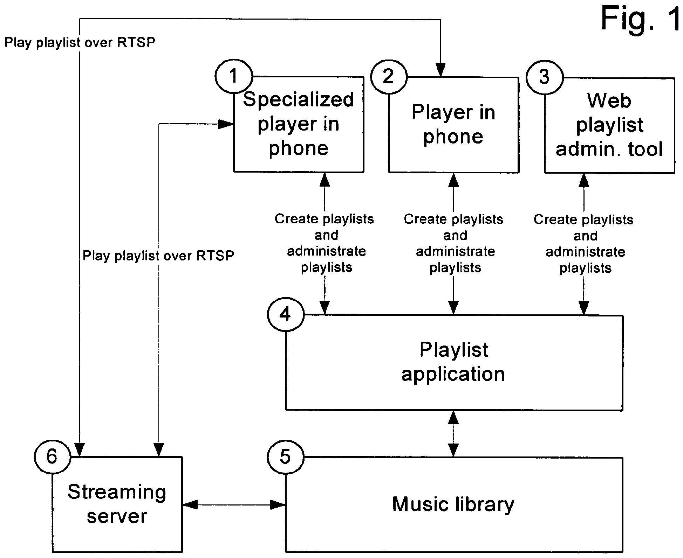

The general components/functions of a system for allowing users to play streaming media, i.e. audio and video media, on their mobile telephones are illustrated in the schematic diagram of Fig. 1, the system as illustrated in particular directed to supplying media items to mobile telephones of the users. In Fig. 1 item 1 is a specialized player module in a mobile telephone, item 2 is the internal or built-in media player of a mobile telephone, 3 is an administration module used in an Internet browser, 4 is a playlist application module including a list handler, 5 is a music library including metadata about music items and the music items themselves, and 6 is a Vidiator streaming server having a playlist functionality, meaning that a list of music items can be read from a file on storage, for example an XML file.

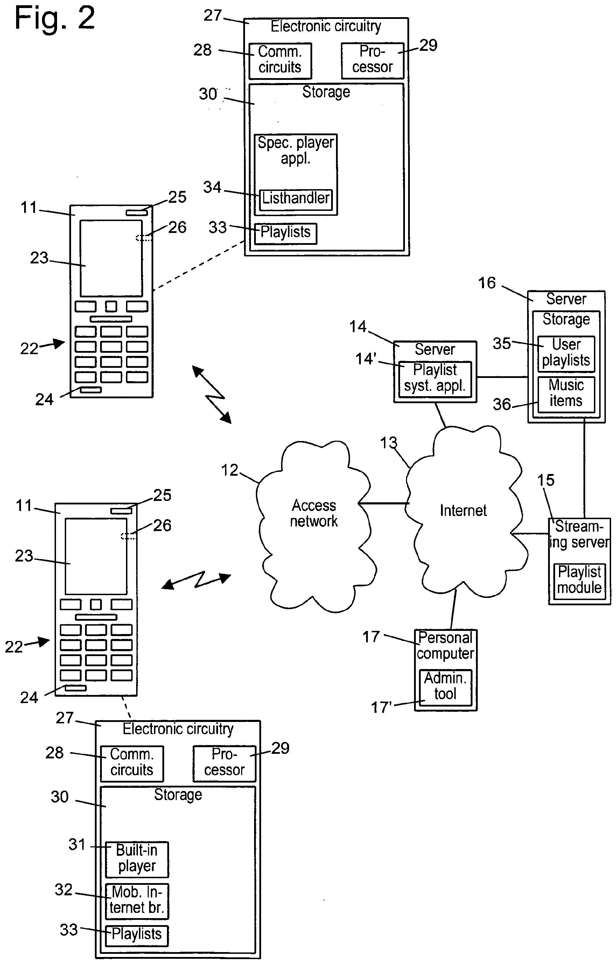

The components/functions of the system of Fig. 1 can be located or distributed in a physical mobile telephony system such as illustrated in the schematic picture of Fig. 2. Mobile telephones 11, 11' can communicate wirelessly with an access network 12 and through the access network with the Internet 13. The wireless access network may e.g. be a 3G network or a network having a similar capacity and functionality, in particular allowing a high bitrate for streaming operations in the down-link direction and for down-load operations. To the Internet 13 various servers are connected that provide particular services such as a server 14 in which a playlist system application 14' is running and a streaming server 15 for providing streaming data such as a Vidiator streaming server, the streaming server including a playlist module. The playlist system application handles all logic for playlists. The playlist application server and the streaming server can be both connected to a server 16 for storing playlists, music items and metadata associated with the music items. Personal computers such as that illustrated at 17 can as conventional be connected to the Internet 13 and they may include an administration tool 17' that is a program used in an ordinary Internet browser.

The mobile telephones 11, 11' have as conventional some input means such as a keyboard 22, a display 23, a microphone 24 and a loudspeaker 25 and possibly an audio output terminal 26. Furthermore, they have other electronic circuitry 27 including in particular communication circuits 28 handling the physical transmission and receiving of voice traffic and other data, e.g. operating according to some suitable 3G-protocol allowing high-speed data traffic, in particular allowing streaming and down-loading of data at high bit-rates. The operation of the mobile telephones 11, 11' is controlled by a processor 29 operating according to suitable software, such as program modules or routines stored in a storage 30. A mobile telephone 11 may thus include an internal or built-in player stored in a memory place 31, allowing the playing of items such as music tunes or video data. Further, it may include an Internet browser stored in a memory place 32, such Internet browsers suitable being adapted for used in mobile telephones. In the storage 30 there may also be a temporarily assigned memory place 33 for one or more playlists. Instead of or addition to the built-in player and the Internet browser a mobile telephone 11' can have a specialised player application stored in a memory place 34.

The playlists are only stored in the memories of the mobile telephones 11, 11' while the respective list handler, i.e. the mobile Internet browser when showing home pages of the playlist application server 14 or the specialised player application is running. The size of a playlist is never very large and can always be fit inside the internal working memory of the device.

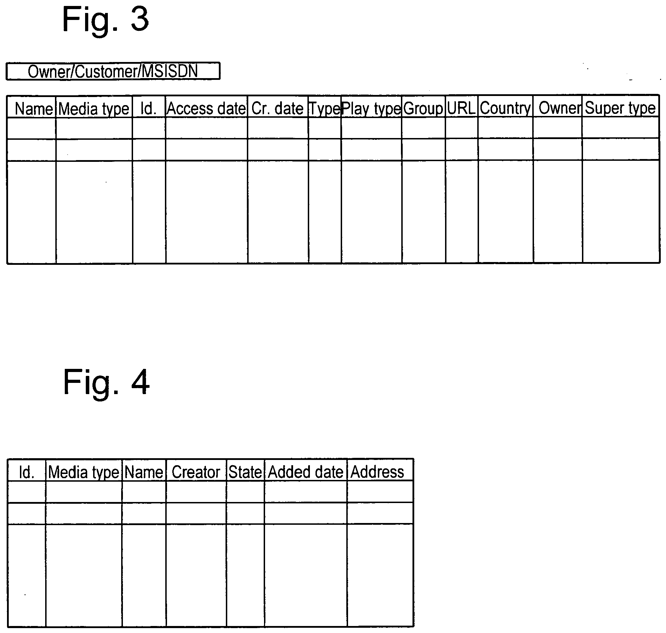

As illustrated in Fig. 4, the playlists may exist in three levels. First of all on a logical level in the database. This is where all editing and managing is done, for example adding a media item to a personal playlist. Second there is a physical level, which holds information about the actual media files. The physical level is a device specific representation of the logical playlist. There can be multiple physical lists associated with a (logical) list. For example devices that only manage to play media items encoded in 56 kbps (kilobits per second) need that list and devices managing 96 kbps encoded files would want that and so on. The third level is a file representation of the physical list. This playlist is a list in XML format, accessible to the streaming server.

The function of the total system including particularly the mobile telephone, playlist system application and the music library will now be described as a plurality of use examples.

### Add a media item to a personal playlist

Adding a media item to a personal playlist may include the following steps.
1.A user of a mobile telephone enters the list handler application running in either the specialized player, the mobile Internet browser or the web administration tool. The user finds one or more media items that he wants to add to a personal playlist, by searching or browsing in the music store. The user selects the media items and chooses an option "add to playlist".
2. The list handler uses the MSISDN (Mobile Subscriber ISDN - the telephone number of a mobile telephone, stored in the SIM card) of the mobile telephone to request from the playlist system application the user's playlists. The invention is not restricted to the used of MSISDN as an identifier. An alternative that serves the same function may be used.
3. The playlist system application receives the requests and retrieves the playlists from the music library.
4. The playlist system application sends the playlists in a suitable format to the mobile telephone.
5. The playlist are received by the mobile telephone and the list handler application running therein presents them in a menu on the display to the user.
6. The user selects the playlist to which she/he wants to add the selected media items.
7. The playlist system application receives the name or identification of the selected playlist and finds the list in the storage area 35 of the music library server 16.
8. The playlist system application 14' retrieves the list from the music library server and metadata associated with the playlist. The metadata are arranged as a list in database and can have a format as illustrated in Fig. 3. As illustrated a record in such a list can have the following fields:
   - Name: The name of the list.
   - Media type: The media type of the list. It is either audio or video.
   - Access date: The date the list was last accessed, i.e. played by a customer.
   - Identification (Id): An identification used by the playlist system application for identifying the playlist when stored in the music library.
   - Creation date: The date when the list was created.
   - Type: The type of the list in terms of personal, public, default, livemusic,
      - - Personal list means that it belongs to a single customer and may be edited only by this customer.
      - - Public means that no customer is associated. A customer cannot manage a public list and a customer can not own a public list.
      - - Default means that it is a list that all customers gets a copy of if they have no personal lists of their own.
      - - Live in general (live music, livetoplist) means that it is a list that is produced by a partner where the owner of the playlist system application encodes and transmits the list to the customers only. Many live types may be defined, e.g. livemusic.
   - Play type: Indicates if the list should be shuffled or ordered when played.
   - Group: Indicates whether the list belongs to a certain group or not. It can hold a group name. A group may for example be "pop".
   - URL: Holds the URL from where the list may be played or from where subscriptions may be bought. Three different types of play URLs may be used - display, play, and subscribe. Display means that the user shall connect to the URL (rtsp) in order to play the list. Play means that the list handler shall connect to the URL (http) in order to play the list. Subscribe means that the user shall follow the URL (http) in order to buy a subscription.
   - Country: Indicates the availability of a list for different countries. A list may be available to customers in several countries
   - Owner: Indicates whether the current user is the owner of a list or not. A "1" indicates that the user is the owner, a "0" that the user is not the owner. This is important in the case of a list being sent to from one customer to another customer.
   - Super type: Indicates whether the list a live list or non-live list. Live means that it is list that is non manageable, i.e. the user may only select to play music items according thereto. Typically it is a list that is produced by a partner where the company providing the playlist system live encodes and transmits the list to the customers only. Non-live lists are composed at playtime using internally stored media. A user may manage only personal non-live lists.
9. The playlist system application verifies that the list is of Super type non-live list by examining the respective field in the metadata record for the playlist.
10. The playlist system application verifies that the list is of type personal by examining the respective field in the metadata record for the playlist.
11. The playlist system application verifies that the list is owned by the Customer using the MSISDN of the customer by examining the respective field in the metadata record for the playlist. The MSISDN can be viewed as equivalent to the telephone number of the user. Alternatives to MSISDN may also be used.
12. The playlist system application verifies that the list is not full by counting the number items in the playlist and comparing it to the maximum number of media allowed for playlist.
13. The playlist system application verifies that there is enough space available in the playlist to add the number of media items supplied by the user, i.e. that the sum of the number of list items and the number of media items that the user wants to add to the list is smaller than or equal to the maximum number of media items allowed for the playlist.
14. For each supplied media item, the playlist system application:
   a. verifies that media items exist in the media library 36.
   b. among those media items that exist the playlist system application verifies that the type of the media item matches the type of the playlist according to the following rule-work:
      i. media item type "video" may be added only to playlists being type "video"
      ii. media item type "music" may be added only to playlist being type "audio"
15. The playlist system application adds the media items that fulfil the all the above criteria to the already existing items in the playlist and sets the added date of the list media item, see the respective field in Fig. 4. The playlist system application creates a number of physical lists and sets the associated physical lists to state "not created". The playlist system application maintains the order in list for each list item by placing the added list items first in list. Already existing list items are placed later in list, e.g.
   Original list:
   1) x
   2) y
   3) z
   Media items to be added to list:
   - a
   - b
   List after addition of a and b:
   1) a
   2) b
   3) x
   4) y
   5) z
16. The playlist system application verifies that all supplied media items with a media type matching the type of the playlist have been added to the list.
17. The playlist system application communicates that the media items has been added to the playlist to the customer such as by showing some message on the display.
18. The use case ends.

Obviously, the above procedure can also be performed from the PC 17 using the administration tool 17'.

### Play media items according to playlist

When the media items in a playlist are to be played, the following steps may be performed.
1. The user accesses the list handler and selects in a displayed menu that she/he wants to play according to a playlist.
2. The list handler application sends, together with the MSISDN of the device, a request to the playlist application for the playlists of the user. Alternatives to MSISDN may also be used.
3. The playlist application receives the request and retrieves the playlist from the music library.
4. The playlist application sends the playlists in a suitable format to the mobile telephone.
5. The playlists are received by the mobile telephone and are by the running list handler shown on the display to the user.
6. The user selects a specific playlist by clicking on a symbol for a corresponding option meaning that the music items of this list are to be played.
7. The list handler application sends information thereof to the playlist system application.
8. The playlist system application finds the requested playlist and verifies that it is not empty by counting the media items.
9. The playlist system application verifies that the list is a non-live list and that it is of type personal by examining the respective fields of the playlist record in the playlist metadata.
10. The playlist system application verifies that the selected playlist is owned by the user, by using the MSISDN as above and examining the respective field.
11. The playlist system application verifies that a play type has been ordered by examining the respective field of the metadata list.
12. The playlist system application verifies that the current list XML representation is in "ordered" state (and not in "shuffled" state or "not created" state) by examining the physical list state. If the state is "not created" the XML representation is created and the state is set to "created".
13. The playlist system application verifies that the physical list XML representation supports the device type currently used by the user by examining the device types of the physical playlist.
14. The playlist system application verifies that no media items in the playlist have been deleted since the current list XML representation was created by retrieving the media items in the playlist that have state deleted and ensuring that none of them have a state date that is after any of the creation dates of the physical playlists.
15. The playlist system application sets the access date of the playlist to current date in the respective field of the metadata record, if the type of the playlist is public or it is personal and owned by the user.
16. The playlist system application retrieves the location of the physical list, e.g. per-19845-987465283.xml.
17. The playlist system application retrieves from the metadata record the following information for the playlist:
   a. Name
   b. Media type
   c. Identification
   d. Access date
   e. Creation date
   f. Type
   g. Play type
   h. Group
   i. Super type
18. The playlist system application constructs, in applicable cases, the URL of the list and also indicates if the current user owns the list or not.
19. The playlist system application replies to the list handler with the list including the retrieved information and the constructed URL, e.g. rtsp://80.251.192.118/req1.0?SrcType=pls&SrcName=UN/DYN/PLS/PRS/21/18/18/71/211818 71/724_A012.pls.
20. Upon reception of this response the stream will be initiated based on the constructed URL since the type of the URL is "play". The stream is played by the player, i.e. by the built-in media player or the specialised player application. The playing may be stopped by e.g. some action by the user.
21. The use case ends.

### Remove media item from a playlist

The following steps may be performed for removing one or more media items from a playlist.
1. The user accesses the list handler and selects in a displayed menu that she/he wants to edit a playlist.
2. The list handler application sends, together with the MSISDN of the device, a request to the playlist application for the playlists of the user. Alternatives to MSISDN may also be used.
3. The playlist application receives the request and retrieves the playlists from the music library.
4. The playlist application sends the playlists in a suitable format to the mobile telephone.
5. The playlists are received by the mobile telephone and are by the running list handler shown on the display to the user.
6. The user selects a specific playlist.
7. The list handler application shows the media items of the of selected playlist.
8. The user selects media items in the playlist and clicks on a symbol of an option for deleting selected items. application system application finds the requested playlist and verifies that it is not empty by counting the media items.
9. The request is transmitted to the playlist system application including the name or identification of the playlist and the names or identifications of the media items to be deleted.
10. The playlist system application finds and retrieves the playlist and its metadata record in the music library.
11. The playlist system application verifies that the playlist is a non-live list by examining the respective field in the metadata record.
12. The playlist system application verifies that the list is type personal by examining the respective field in the metadata record.
13. The playlist system application verifies that the list is owned by the user, using MSISDN.
14. For each supplied media item to be removed the playlist system application verifies that the media item exists in list.
15. The playlist system deletes the list items associated with the media items from the playlist and sets the associated physical lists to state "not created". The playlist system maintains the order in the playlist for each list item, e.g.:
   Original list:
      i. a
      ii. b
      iii. x
      iv. y
      v. z
   Media items to be removed from list:
      - b
      - y
   List after removal of b and y:
      i. a
      ii. x
      iii. z
16. The edited playlist is stored in the musical library.
17. The use case ends.

### Create a playlist

When a user wants to create a new playlist the following steps may be performed.
1. The user opens the List handler and selects menu option for creating a new playlist. The list handler connects to the playlist system application and informs it on request.
2. The playlist system application identifies the user using the MSISDN. Alternatives to MSISDN may also be used.
3. The playlist system application verifies that the user does not already have more than a maximum allowed number of playlists that she/he owns.
4. The playlist system application asks the user to name the list by sending some information to the list handler. A picture is then shown on the display having a blank field for entering the name.
5. The user enters a name and the list handler sends information thereof to the playlist system application.
6. The playlist system application asks the user to indicate the media type of the new playlist, i.e. audio or video, by sending some information to the list handler. A menu is then shown on the display.
7. The user selects one of the menu options. Information on the selected option is sent to the playlist system application by the list handler.
8. The playlist system application asks the user to select one of:
   - Save playlist in the music library
   - Cancel (go to back URL
   - View playlist system defined location, e.g. start of music product.
9. If the option "Save playlist" is selected, the playlist system application saves the list in the music library.
10. The playlist system application verifies that playlist has been named and given a media type.
11. The playlist system application creates an empty playlist, a physical list and a metadata record setting the following information:
   - Customer MSISDN
   - Name of playlist
   - Media type of playlist
   - Creation date of playlist
   - Type of playlist is set to "personal"
   - Maximum number of media items for the playlist
   - Merchants for playlist
   - Play type is set to "ordered"
   - State of the physical playlist is set to "not created".
12. The playlist system application stores the empty playlist, the metadata record in the music library.
13. The playlist system application presents the user's playlists, see the use case "View playlists".
14. The use case ends.

### View playlists

In the case where a user wants to see a playlist the following steps may be performed.
1. The user opens the list handler.
2. The user selects a menu option requesting (to view a specific list or another option) to view all her/his playlists.
3. The list handler informs the playlist system application about the choice made by the user.
4. The playlist system application identifies the user using e.g. MSISDN as above.
5. The playlist system application determines that the user requests all her/his personal playlists.
6. The playlist system application retrieves all lists of type personal that the user owns.
7. The playlist system application verifies that the user owns at least one playlist.
8. For each playlist the playlist system application retrieves from the respective metadata record:
   - Name
   - Media type
      . Identification
   - Access date
9. The playlist system application sorts the lists based on media type and within media type based on access date.
10. The playlist system application sends information to the list handler for presenting the user's existing playlists with:
   - Name
   - Type
      - Play option (none/shuffle)
      - View list option
   - Create a new list option
   - Back link. Lets Customer go back to where he came from, e.g. a search result view. Only presented if back url and back link text supplied.
   - View playlist system defined location, e.g. start of music product.
11. The list handler receives the information and displays it.
12. The user looks on the displayed information and selects a specific playlist.
13. Information on the user's selection is sent by the list handler to the playlist system application.
14. The playlist system application finds the corresponding playlist and its metadata record based on the received information and verifies that the playlist is not empty by examining the playlist itself.
15. The playlist system application determines the type of the playlist and if the user owns the list, if the type of the playlist is personal, by examining the respective fields in the metadata record.
16. The playlist system application retrieves all media items in the playlist and sorts them in ascending order based on order in list, i.e. smallest value first in playlist, e.g. 1, 2, 3, 4, 5, 6, etc.
17. The playlist system application sends information to the list handler for presenting the playlist to the user including the following information:
   - List name
   - List media type
   - Name of each media item in the playlist. Name of creator/main artist associated with each media item. The sorting order of list is as above, i.e. ascending based on order in list. Only a predetermined number of list items per displayed page is presented. The playlist system application provides a next/previous media items option for the user if more media items exist. On each page the playlist system application displays the order of the media items presented with start order and end order, and the total number of media items in list, e.g. "1 - 5 of 23"
   - State of media item indicating if media item is still available or not, deleted or active.
   - Play type of list
18. The list handler receives the information and uses it for displaying.
19. The playlist system application sends information to the list handler for presenting the following options to the user:
   - Play playlist
   - Shuffle, if play type "ordered", do not shuffle if play type "shuffled". View more for each media item (to view all media items available for the media item name).
   - Remove from playlist for each media item Send to a friend option . This option allows the user to send the list to a friend. The friend may view the playlist.
   - Edit playlist. This options allows the user to change the name of the playlist, etc.
   - Back link. This option allows the user to go back to where she/he came from, e.g. a search result view. This option is only presented if back URL and back link text are supplied.
   - View all lists. This option allows the user to view all her/his lists
   - View playlist system defined location, e.g. start of music product.
18. The information is received by the list handler and used for displaying.
19. The user makes a selection. For some see other use cases.
20. The use case ends.

### Manage play type

In managing the play type of a playlist the following steps may be performed.
1. The user opens the list handler and selects menu option requesting to manage the play type of a playlist, the user then searching for playlist and selecting one, and the wanted play type for the selected playlist.
2. The list handler sends information on selected option and other entered information to the playlist application system.
3. The playlist system application receives information from the list handler and finds the playlist in the music library based on the received information.
4. The playlist system application retrieves the playlist and its metadata record.
5. The playlist system application verifies that the playlist is a non-live list by examining the respective field in the metadata record.
6. The playlist system application verifies that the playlist is of type personal by examining the respective field in the metadata record.
7. The playlist system application verifies that the playlist is owned by the user, using e.g. MSISDN as above.
8. The playlist system application sets the play type of the playlist using the play type defined in the information received from the list handler by modifying the metadata record and sets the physical list state to "not created".
9. The modified metadata record and information for physical list state are stored in the music library.
10. The use case ends.

### Manage media item order in playlist

1. The user opens the list handler.
2. The user selects menu option requesting to set the order of media items in a specific playlist.
3. The user selects a playlist.
4. The list handler sends information to the playlist system application on selected menu option and name/identification of the selected playlist.
5. The playlist system application finds the playlist in the music library based on the received information.
6. The playlist system application retrieves the playlist and its metadata record from the music library.
7. The playlist system application verifies that the playlist is a non-live list by examining the respective field in the metadata record.
8. The playlist system application verifies that the list is type personal by examining the respective field in the metadata record.
9. The playlist system application verifies that the list is owned by the user, using the MSISDN and by examining the field User in the metadata record.
10. For each selected media item and (new) position group the playlist system application:
   - Finds the media item in the playlist
   - Sets the order in the playlist equal to supplied position in the associated list item
11. The playlist system application ensures the integrity of the order of the media items in the playlist by:
   i. Retrieving the list items and sorting them in ascending order, i.e. lowest order value first.
   ii. Setting the order in the list for each media item starting with 1 based on the previous sorting operation.
12. The playlist system application stores the modified playlist in the musical library.
13. The playlist system application sets the associated physical lists to state "not created".
14. The use case ends.

In other advanced embodiments, it is possible to keep local copies of recently used playlists and music. For instance, using HTTP Streaming (also known as Progressive Download) instead of RTP Streaming would allow a handset to cache content and playlist locally. The server and handset cache may then use normal HTTP caching directives to ensure the local copy is kept up to date with the network copy e.g.

Using HTTP Conditional GET Requests ("If-Modified-Since) to fetch content and/or playlists will tell the server only to send the requested file is it is more recent version than the local copy (see RFC2616 standard for HTIT). The great advantage of this approach is that music can also be listened to when the user has no radio data connectivity (e.g. on a airplane, in the metro underground, when roaming abroad).

In a further embodiment, it would be possible for user to keep permanent copies of some content on their handset and reference these files in the same playllist (e.g. using a URL that references a local memory location)

## Claims

1. A mobile telephone system for streaming playlists to a device in a mobile network including
- a mobile telephone (11) owned by a user and adapted to play media items and to connect to the Internet (13),
- an application server (14) connected to the Internet in which a playlist system application (14') is running,
a music library connected to the application server, files representing media items being stored in the music library,
wherein a streaming server (15) is connected to the Internet (13), the streaming server (15) configured to send streaming data to the mobile telephone (11) according to a playlist (35) having an adapted format; and
wherein said playlist system application (14') is configured to perform one or more verification steps prior to creating or manipulating a playlist to verify if certain criteria are met for each request made by a user to create or manipulate a playlist; said playlist system application (14')being configured to create or manipulate the playlist only after said verification; and wherein at least one playlist personal to said user is stored in a storage (16) connected to the application server, the playlist specifying in a selected order a number of media items, the files of which are stored in the music library, and a copy or copies of the said at least one personal playlist is/are stored in the mobile device when the media items of the playlist are being edited and/or are being played.

2. The mobile telephone system of claim 1, wherein the copy or copies of the said at least one personal playlist is/are stored in the mobile device only when the media items are of the playlist are being edited and/or are being played.

3. The mobile telephone system of claim 1, wherein for each personal playlist a physical playlist is provided, the physical playlist defining the same media items as the personal playlist but specifying files that are specially adapted to the mobile telephone of the user, in particular the data receiving capabilities of the mobile user, and to the music player of the mobile telephone.

4. The mobile telephone system of claim 3, wherein for each physical playlist an XML-list is provided defining the same media items as the physical playlist but defining the files to be played according to the personal playlist associated with the physical playlist in a format suitable to be used by the streaming server.

5. The mobile telephone system of claim 1, wherein a computer of the user is connected to the Internet, an administration tool running in the computer allowing the user to create and edit playlists of the user using the computer.

6. The mobile telephone system of claim 1 wherein said playlist system application is configured to verify if the number of playlists owned by a user has not exceeded a maximum allowed number, prior to creation of an empty playlist.

7. The mobile telephone system of claim 1 wherein said playlist system application is configured to perform the following verification steps prior to an addition of one or more media items to an existing playlist:
- examine a metadata record for the playlist to verify if the playlist is non-live, personal and owned by the user;
- verify that the playlist is not full by comparing the number of existing media items in the playlist to a maximum number of items allowable;
- verify if space is available in the playlist to add the media item(s) ; and
- verify if the media type of the items to be added match the media type supported by the playlist;
wherein said playlist system application is configured to add the one or more media items only if they satisfy the above verification steps.

8. The mobile telephone system of claims 3 and 4 wherein said playlist system application is configured to perform the following verification steps prior to playing one or more media items from an existing playlist:
- verify if the playlist is not empty by counting the existing media items;
- examine the metadata record for the playlist to verify if the playlist is non-live, personal, owned by the user and if a play type has been ordered;
- verify that a current XML list representation is in an ordered stated ;
- verify if the physical list XML representation supports the user's device type; and
- verify that no media items were deleted since creation of the current XML list representation.

9. The mobile telephone system of claim 1 wherein said playlist system application is configured to perform the following verification steps prior to removing one or more media items from an existing playlist:
- examine the metadata record for the playlist to verify if the playlist is non-live, personal and owned by the user; and
- for each item needed to be remove, verify if such item exists in the playlist.

10. The mobile telephone system of claim 1 wherein said playlist system application is configured to perform the following verification steps prior to viewing an existing playlist:
- verify that the user owns at least one playlist;
- verify if the playlist is not empty by examining the playlist; and
- examine the metadata record for the playlist to verify if the playlist is personal and owned by the user.

## Patentansprüche

1. Mobiltelefonsystem zum Streamen von Wiedergabelisten auf ein Gerät in einem mobilen Netzwerk, beinhaltend
- ein Mobiltelefon (11), das sich im Besitz eines Benutzers befindet und konfiguriert ist, Medienelemente wiederzugeben und eine Verbindung zum Internet (13) herzustellen,
- ein Anwendungsserver (14), der mit dem Internet verbunden ist, auf dem eine Wiedergabelisten-Systemanwendung (14') ausgeführt wird,
eine Musikbibliothek, die mit dem Anwendungsserver verbunden ist, Medienelemente repräsentierende Dateien, die in der Musikbibliothek gespeichert werden,
- worin ein Streaming-Server (15) mit dem Internet (13) verbunden ist und der Streaming-Server (15) konfiguriert ist, Daten auf das Mobiltelefon (11) zu streamen, die einer Wiedergabeliste (35) mit einem angepassten Format entsprechen; und
- worin diese Wiedergabelisten-Systemanwendung (14') konfiguriert ist, einen oder mehrere Verifikationsschritte vor der Erstellung oder Bearbeitung einer Wiedergabeliste auszuführen, um zu verifizieren, ob bestimmte Kriterien für jede Anforderung erfüllt sind, die von einem Benutzer zum Erstellen oder Bearbeiten einer Wiedergabeliste gestellt wird; worin diese Wiedergaben-Systemanwendung (14') konfiguriert ist, die Wiedergabeliste nur nach dieser Verifikation zu erstellen oder zu bearbeiten; und
worin mindestens eine auf diesen Benutzer persönlich zugeschnittene Wiedergabeliste in einem Speicher (16) gespeichert wird, der mit dem Anwendungsserver verbunden ist, die Wiedergabeliste in einer ausgewählten Reihenfolge eine Anzahl von Medienelementen festlegt, deren Dateien in der Musikbibliothek gespeichert werden, und eine Kopie oder Kopien von dieser mindestens einen persönlichen Wiedergabeliste in dem Mobilgerät gespeichert wird/werden, wenn die Medienelemente der Wiedergabeliste bearbeitet und/oder wiedergegeben werden.

2. Mobilgerätesystem nach Anspruch 1, worin die Kopie oder die Kopien dieser mindestens einen persönlichen Wiedergabeliste nur in dem Mobilgerät gespeichert wird/werden, wenn die Medienelemente der Wiedergabeliste bearbeitet und/oder wiedergegeben werden.

3. Mobilgerätesystem nach Anspruch 1, worin für jede persönliche Wiedergabeliste eine physische Wiedergabeliste bereitgestellt wird, wobei die physische Wiedergabeliste dieselben Medienelemente wie die persönliche Wiedergabeliste definiert, darüber hinaus jedoch Dateien festlegt, die speziell an das Mobiltelefon des Benutzers, insbesondere an die Datenempfangsfähigkeiten des mobilen Benutzers, und an den Musik-Player des Mobiltelefons angepasst sind.

4. Mobiltelefonsystem nach Anspruch 3, worin für jede physische Wiedergabeliste eine XML-Liste bereitgestellt wird, die dieselben Medienelemente wie die physische Wiedergabeliste definiert, darüber hinaus jedoch die Dateien, die gemäß der mit der physischen Wiedergabeliste verknüpften persönlichen Wiedergabeliste wiedergegeben werden sollen, in einem Format definiert, das von dem Streaming-Server zur Verwendung geeignet ist.

5. Mobiltelefonsystem nach Anspruch 1, worin ein Computer des Benutzers mit dem Internet verbunden ist und ein Verwaltungstool auf dem Computer ausgeführt wird, das dem Benutzer das Erstellen und Bearbeiten von Wiedergabelisten des Benutzers mit dem Computer ermöglicht.

6. Mobiltelefonsystem nach Anspruch 1, worin diese Wiedergabelisten-Systemanwendung konfiguriert ist, vor dem Erstellen einer leeren Wiedergabeliste zu verifizieren, ob die Anzahl an Wiedergabelisten, die sich im Besitz eines Benutzers befinden, nicht eine maximale zulässige Anzahl überschritten hat.

7. Mobiltelefonsystem nach Anspruch 1, worin diese Wiedergabelisten-Systemanwendung konfiguriert ist, die folgenden Verifikationsschritte auszuführen, bevor ein oder mehrere Medienelemente zu einer vorhandenen Wiedergabeliste hinzugefügt werden:
- Untersuchen eines Metadaten-Datensatzes für die Wiedergabeliste, um zu verifizieren, ob es sich um eine Wiedergabeliste handelt, die nicht live ist, persönlich ist und dem Benutzer gehört;
- Verifizieren, dass die Wiedergabeliste nicht voll ist, indem die Anzahl an vorhandenen Medienelementen mit einer maximal zulässigen Anzahl an Elementen verglichen wird;
- Verifizieren, ob die Wiedergabeliste noch über freie Plätze zum Hinzufügen von Medienelementen verfügt; und
- Verifizieren, ob der Medientyp der hinzuzufügenden Elemente dem von der Wiedergabeliste unterstützten Medientyp entspricht;
worin diese Wiedergabelisten-Systemanwendung so konfiguriert ist, dass sie das eine oder die mehreren Medienelemente nur hinzufügt, wenn sie die zuvor aufgeführten Verifikationsschritte erfüllen.

8. Mobiltelefonsystem nach Anspruch 3 und Anspruch 4, worin diese Wiedergabelisten-Systemanwendung konfiguriert ist, die folgenden Verifikationsschritte auszuführen, bevor ein oder mehrere Medienelemente von einer vorhandenen Wiedergabeliste wiedergegeben werden:
- Verifizieren, ob die Wiedergabe nicht leer ist, durch Zählen der vorhandenen Medienelemente;
- Untersuchen des Metadaten-Datensatzes für die Wiedergabeliste, um zu verifizieren, ob es sich um eine Wiedergabeliste handelt, die nicht live ist, persönlich ist und dem Benutzer gehört, und ob ein Wiedergabetyp ausgewählt wurde;
- Verifizieren, dass sich eine aktuelle XML-Listendarstellung im sortierten Zustand befindet;
- Verifizieren, ob die XML-Darstellung der physischen Liste den Gerätetyp des Benutzers unterstützt; und
- Verifizieren, dass keine Medienelemente seit dem Erstellen der aktuellen XML-Listendarstellung gelöscht wurden.

9. Mobiltelefonsystem nach Anspruch 1, worin diese Wiedergabelisten-Systemanwendung konfiguriert ist, die folgenden Verifikationsschritte auszuführen, bevor ein oder mehrere Medienelemente aus einer vorhandenen Wiedergabeliste entfernt werden:
- Untersuchen des Metadaten-Datensatzes für die Wiedergabeliste, um zu verifizieren, ob es sich um eine Wiedergabeliste handelt, die nicht live ist, persönlich ist und dem Benutzer gehört; und
- für jedes zu entfernende Element verifizieren, ob dieses Element in der Wiedergabeliste vorhanden ist.

10. Mobiltelefonsystem nach Anspruch 1, worin diese Wiedergabelisten-Systemanwendung konfiguriert ist, die folgenden Verifikationsschritte auszuführen, bevor eine vorhandene Wiedergabeliste angezeigt wird:
- Verifizieren, dass der Benutzer mindestens eine Wiedergabeliste besitzt;
- Verifizieren, ob die Wiedergabeliste nicht leer ist, durch Untersuchen der Wiedergabeliste; und
- Untersuchen des Metadaten-Datensatzes für die Wiedergabeliste, um zu verifizieren, ob es sich um eine persönliche Wiedergabeliste handelt, und ob diese dem Benutzer gehört.

## Revendications

1. Système de téléphonie mobile pour la diffusion en continu de listes de lecture sur un dispositif dans un réseau mobile incluant
- un téléphone mobile (11) appartenant à un utilisateur et adapté pour lire des éléments multimédias et pour se connecter à l'Internet (13),
- un serveur d'applications (14) connecté à l'Internet dans lequel une application de système de listes de lecture (14') s'exécute,
une bibliothèque musicale connectée au serveur d'applications, des fichiers représentant les éléments multimédias étant stockés dans la bibliothèque musicale,
- où un serveur de diffusion en continu (15) est connecté à l'Internet (13), le serveur de diffusion en continu (15) étant configuré pour envoyer des données de diffusion en continu au téléphone mobile (11) selon une liste de lecture (35) ayant un format adapté ; et
- où ladite application de système de listes de lecture (14') est configurée pour exécuter une ou plusieurs étapes de vérification avant la création ou la manipulation d'une liste de lecture pour vérifier si certains critères sont satisfaits pour chaque demande réalisée par un utilisateur de créer ou de manipuler une liste de lecture ; ladite application de système de listes de lecture (14') étant configurée pour créer ou manipuler la liste de lecture uniquement après ladite vérification ; et
- où au moins une liste de lecture personnelle dudit utilisateur est stockée dans un stockage (16) connecté au serveur d'applications, la liste de lecture spécifiant dans un ordre choisi un nombre d'éléments multimédias, les fichiers desquels sont stockés dans la bibliothèque musicale, et une copie ou des copies de ladite au moins une liste de lecture personnelle est/sont stockée (s) dans le dispositif mobile lorsque les éléments multimédias de la liste de lecture sont en cours d'édition et/ou de lecture.

2. Système de téléphonie mobile selon la revendication 1, dans lequel la copie ou les copies de ladite au moins une liste de lecture personnelle est/sont stockée(s) dans le dispositif mobile uniquement lorsque les éléments multimédias de la liste de lecture sont en cours d'édition et/ou de lecture.

3. Système de téléphonie mobile selon la revendication 1, dans lequel pour chaque liste de lecture personnelle une liste de lecture physique est fournie, la liste de lecture physique définissant les mêmes éléments multimédias que la liste de lecture personnelle, mais spécifiant des fichiers qui sont spécifiquement adaptés au téléphone mobile de l'utilisateur, en particulier les capacités de réception de données de l'utilisateur mobile, et au lecteur de musique du téléphone mobile.

4. Système de téléphonie mobile selon la revendication 3, dans lequel pour chaque liste de lecture physique une liste XML est fournie, définissant les mêmes éléments multimédias que la liste de lecture physique mais définissant les fichiers à lire en fonction de la liste de lecture personnelle associée à la liste de lecture physique dans un format approprié pour être utilisé par le serveur de diffusion en continu.

5. Système de téléphonie mobile selon la revendication 1, dans lequel un ordinateur de l'utilisateur est connecté à l'Internet, un outil de gestion en exécution sur l'ordinateur permettant à l'utilisateur de créer et d'éditer des listes de lecture de l'utilisateur en utilisant l'ordinateur.

6. Système de téléphonie mobile selon la revendication 1, dans lequel ladite l'application de système de listes de lecture est configurée pour vérifier si le nombre de listes de lecture possédées par un utilisateur n'a pas excédé un nombre maximal autorisé, avant la création d'une liste de lecture vide.

7. Système de téléphonie mobile selon la revendication 1, dans lequel ladite application de système de listes de lecture est configurée pour exécuter les suivantes étapes de vérification avant l'ajout d'un ou plusieurs éléments multimédias à une liste de lecture existante :
- l'examen d'un registre de métadonnées pour la liste de lecture pour vérifier si la liste de lecture est non-directe, personnelle et la propriété de l'utilisateur ;
- la vérification que la liste de lecture n'est pas remplie en comparant le nombre d'éléments multimédias existant dans la liste de lecture à un nombre maximal d'éléments admissible ;
- la vérification si l'espace est disponible dans la liste de lecture pour ajouter le ou les éléments multimédia ; et
- la vérification si le type de média des éléments à ajouter correspond au type de média supporté par la liste de lecture ;
où ladite application de système de listes de lecture est configurée pour ajouter l'un ou plusieurs éléments multimédias uniquement s'ils satisfont les étapes de vérification ci-dessus.

8. Système de téléphonie mobile selon les revendications 3 et 4, dans lequel ladite application de système de listes de lecture est configurée pour exécuter les suivantes étapes de vérification avant la lecture d'un ou plusieurs éléments multimédias d'une liste de lecture existante :
- la vérification si la liste de lecture n'est pas vide en comptant les éléments multimédias existants ;
- l'examen du registre de métadonnées pour la liste de lecture pour vérifier si la liste de lecture est non-directe, personnelle et la propriété de l'utilisateur et si un type de lecture a été ordonné ;
- la vérification que la représentation actuelle de la liste XML est dans un état ordonné ;
- la vérification si la représentation physique de la liste XML supporte le type de dispositif de l'utilisateur ; et
- la vérification qu'aucun élément multimédia n'a été supprimé depuis la création de la représentation actuelle de la liste XML.

9. Système de téléphonie mobile selon la revendication 1, dans lequel ladite application de système de listes de lecture est configurée pour exécuter les suivantes étapes de vérification avant l'élimination d'un ou plusieurs éléments multimédias d'une liste de lecture existante :
- l'examen du registre de métadonnées pour la liste de lecture pour vérifier si la liste de lecture est non-directe, personnelle et la propriété de l'utilisateur ; et
- pour chaque élément devant être éliminé, la vérification si un tel élément existe dans la liste de lecture.

10. Système de téléphonie mobile selon la revendication 1, dans lequel ladite application de système de listes de lecture est configurée pour exécuter les suivantes étapes de vérification avant la visualisation d'une liste de lecture existante :
- la vérification que l'utilisateur possède au moins une liste de lecture ;
- la vérification si la liste de lecture n'est pas vide en examinant la liste de lecture ; et
- l'examen du registre de métadonnées pour la liste de lecture pour vérifier si la liste de lecture est personnelle et la propriété de l'utilisateur.
